# EUROPEAN PATENT APPLICATION

(11) **EP 2 738 911 A1**
(43) Date of publication of application: **04.06.2014**
(21) Application number: 13195058.6
(22) Date of filing: 29.11.2013
(51) Int. Cl.: H02J 7/00, H01R 25/00, H02B 1/52

(54) **System for organized storage of chargers for electrical equipment**

(30) Priority: 30.11.2012 NL 2009913
(71) Applicant: Wigger, Martin Maria, 7603 MG Almelo (NL)
(72) Inventor: Wigger, Martin Maria, 7603 MG Almelo (NL)
(74) Representative: Mink-Lindenburg, Charlotte Hildegard

(57) **Abstract**

The invention relates to a system (1) for organized storage of chargers (100) for electrical equipment (110). According to the invention the system is provided with a generally plate-like surface (2) in which a pattern of first holes is arranged for receiving plug pins of the chargers for electrically insulated suspension of the chargers.

## Description

The present invention relates to a system for organized storage of chargers for electrical equipment, in particular hand-sized electrical equipment.

Hand-sized electrical equipment, such as mobile phones and digital cameras, has become an integral part of modern life. There is for this reason a commercial need for a system for storing the associated chargers. Known in the relevant field are diverse systems in which the chargers can be individually placed. These known systems have the drawback that the chargers can be damaged or the wiring of the chargers can become entangled.

The present invention has for its object to provide a solution herefor. The system according to the invention has for this purpose the feature that the system is provided with a generally plate-like surface in which a pattern of first holes is arranged for receiving plug pins of the chargers for electrically insulated suspension of the chargers.

The inventive concept is based on the insight that all chargers are provided with plugs with plug pins which can be utilized for suspending the chargers from a plate-like surface without also connecting the chargers electrically. In order to ensure a reliable suspension, in a first preferred embodiment the first holes run obliquely downward as seen in insertion direction of the plug pins and when the device is in use. Alternatively, a reliable suspension can be achieved according to a second embodiment in which the first holes are configured to clampingly receive the plug pins.

According to an efficient preferred embodiment, the system is further provided with holders for placing of the hand-sized electrical equipment, which holders are provided with pins for co-action with the first holes. The holders can advantageously be attached releasably to the plate-like surface and can receive hand-sized electrical equipment so that not only the chargers but also the electrical equipment itself can be stored in organized manner in the system according to the invention.

According to a very complete preferred embodiment, the system is further provided with electrical charging devices, such as socket outlets, which are provided with pins for co-action with the first holes. In this preferred embodiment electrical charging devices are releasably attachable to the surface for the purpose of providing charging points for the chargers.

According to a practical preferred embodiment, the system is further provided with means for hingedly suspending the generally plate-like surface from a wall, and a pattern of first holes is arranged on both sides of the generally plate-like surface such that the surface is accessible from both sides.

According to a further preferred embodiment, the plate-like surface is further provided with second holes for passage of electrical wiring of the chargers. The holders and the electrical charging devices can now be accommodated at random on both sides of the plate-like surface and equipment placed in the holders can be charged at all times.

The invention will now be further elucidated with reference to the accompanying drawings, in which:
Figure 1A shows schematically a preferred embodiment of a system according to the invention from a first viewpoint;
Figure 1B shows a partial cross-section of the system of figure 1A;
Figure 1C shows a part of figure 1B in more detail;
Figure 2A shows schematically the preferred embodiment of figure 1A from a second viewpoint; and
Figure 2B shows a partial cross-section of the system of figure 2A.

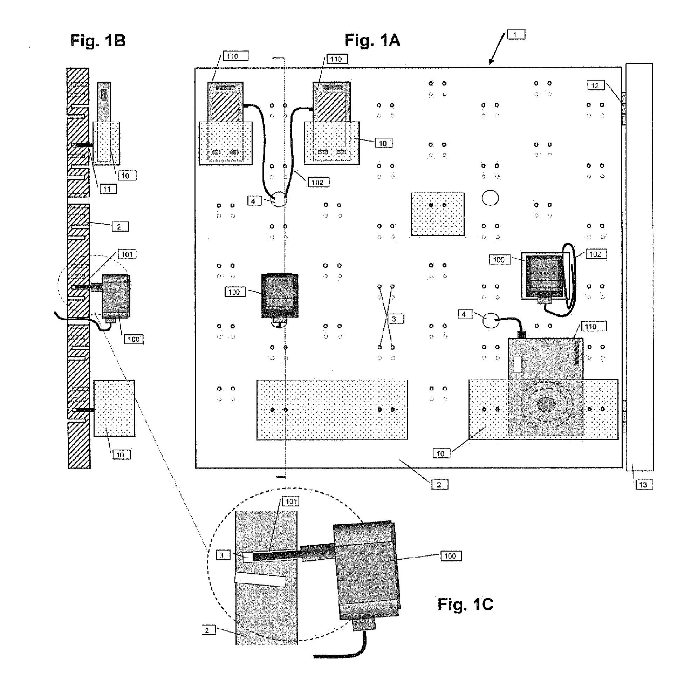

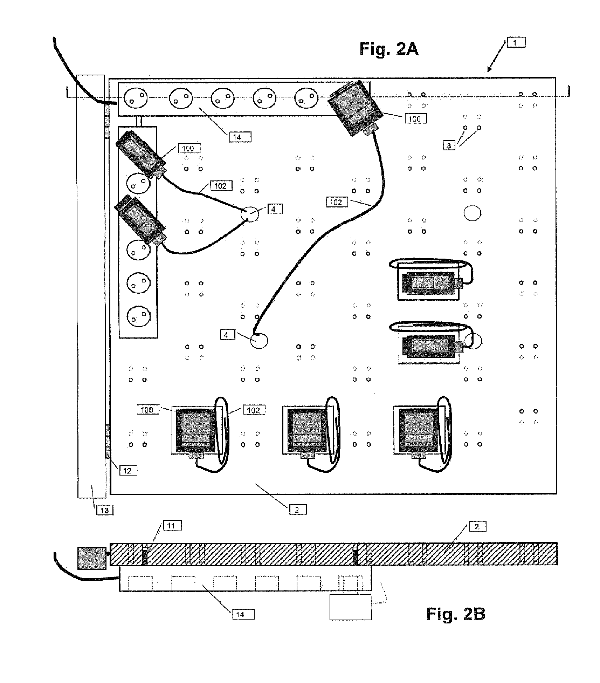

Figures 1A and 2A show schematically a system 1 according to the invention from two different viewpoints. Figure 1A shows the front side of system 1, while figure 2A shows the rear side of system 1.

System 1 is intended for the purpose of organized storage of chargers 100 for electrical equipment 110. System 1 is particularly intended for the purpose of organized storage of chargers of hand-sized electrical equipment such as mobile phones and digital cameras.

System 1 comprises a generally plate-like surface 2 in which a pattern of first holes 3 is arranged. The generally plate-like surface 2 will be referred to in the rest of the figure description as board 2. Holes 3 are configured to receive plug pins or plug poles 101 of chargers 100 and serve for suspension of chargers 100.

This suspension is illustrated on the basis of figures 1B and 1C. Shown herein is that a charger 100 for hand-sized electrical equipment is provided with plug pins 101 which can be received in holes 3. Holes 3 are optionally arranged running slightly obliquely and downward in board 2 in insertion direction of plug pins 101 (see figure 1C). The downward direction is related to the orientation in which board 2 will normally be suspended in the situation of use. As alternative to running obliquely downward, holes 3 can be configured to clampingly receive plug pins 101. This clamping receiving can be achieved in different ways, for instance with a diameter of holes 3 decreasing in insertion direction of plug pins 101 or with a suitable choice of the material of board 2, for instance foam. First holes 3 are electrically insulated and are expressly not intended to form a charging point for charger 100.

According to the invention the holes 3 are likewise intended for suspending other components, such as holders 10 for the hand-sized electrical equipment or socket outlets 14. Figure 1B illustrates for instance a holder 10 as component of the system according to the invention, this holder 10 being provided with pins 11 for co-action with first holes 3. Figure 2B illustrates for instance socket outlets 14 which are likewise provided with pins 11 for co-action with first holes 3. Pins 11 have a form corresponding to the form of plug pins 101. Chargers 100, holders 10 and socket outlets 14 can be placed at any desired position on board 2.

In the shown preferred embodiment system 1 further comprises means for hinged suspension of board 2 from a wall such that the surface of board 2 is accessible from both sides. In the preferred embodiment hinges 12 are attached along one of the peripheral sides of board 2 for the purpose of hinged suspension of board 2 from a beam 13 which is fixable to a wall.

In the shown preferred embodiment chargers 100 and holders 10 are situated on the front side of board 2, while socket outlets 14 are attached to the rear side of the board.

Board 2 is further provided with second holes 4 for passage of electrical wiring. Hand-sized electrical equipment placed in a holder 10 on one side of board 2 can hereby optionally be charged using a socket outlet 14 attached to the other side of board 2. Charger 100 must be inserted into socket outlet 14, after which the wiring 102 can be guided through second holes 4 to the electrical equipment 110 in holder 10 in order to be connected thereto.

Diverse types of material can be used for board 2, including wood, plastic, cardboard and optionally metal. First holes 3 must be embodied such that they do not function as charging points for the chargers, but do however provide sufficient strength to attach chargers 100 and/or holders 10 and/or socket outlets 14 in reliable manner to board 2 via plug pins 101 and/or pins 11.

The invention is expressly not limited to the described and shown preferred embodiment. As alternative all components, including holders 10 and socket outlets 14 can for instance be arranged on one side of board 2, wherein board 2 need be provided on only one side with first holes 3 and second holes 4 can be omitted, as can hinge means 12 and 13. Board 2 can then for instance be arranged against a wall using means suitable for the purpose. If desired, a housing can be arranged round board 2. Further modifications lie within the reach of a skilled person in the field and fall within the scope of protection of the appended claims as seen in the light of the foregoing description and associated figures.

## Claims

1. System for organized storage of chargers for electrical equipment, **characterized in that** the system is provided with a generally plate-like surface in which a pattern of first holes is arranged for receiving plug pins of the chargers for electrically insulated suspension of the chargers.

2. System as claimed in claim 1, wherein the first holes run obliquely downward as seen in insertion direction of the plug pins and when the device is in use.

3. System as claimed in claim 1, wherein the first holes are configured to clampingly receive the plug pins.

4. System as claimed in any of the foregoing claims, wherein the system is further provided with holders for placing of the hand-sized electrical equipment, which holders are provided with pins for co-action with the first holes.

5. System as claimed in any of the foregoing claims, wherein the system is further provided with electrical charging devices, such as socket outlets, which are provided with pins for co-action with the first holes.

6. System as claimed in any of the foregoing claims, wherein the system is further provided with means for hingedly suspending the generally plate-like surface from a wall, and wherein a pattern of first holes is arranged on both sides of the generally plate-like surface.

7. System as claimed in any of the foregoing claims, wherein the plate-like surface is further provided with second holes for passage of electrical wiring of the chargers.
